# EUROPEAN PATENT SPECIFICATION

(11) **EP 3 480 104 B1**
(45) Date of publication and mention of the grant of the patent: **25.03.2020**
(21) Application number: 17425111.6
(22) Date of filing: 06.11.2017
(51) Int. Cl.: B62M 6/55, B62M 9/123, B62M 25/02

(54) **CRANK DRIVE MOTOR FOR ELECTRIC BICYCLE WITH AUTOMATIC GEAR SHIFTING**
KURBELANTRIEBSMOTOR FÜR ELEKTRISCHES FAHRRAD MIT AUTOMATISCHER GANGSCHALTUNG
MOTEUR D'ENTRAÎNEMENT À MANIVELLE POUR BICYCLETTE ÉLECTRIQUE AVEC CHANGEMENT DE VITESSE AUTOMATIQUE

(43) Date of publication of application: 08.05.2019
(73) Proprietor: ASKOLL EVA S.r.l. a Socio Unico, 36031 Dueville (Vicenza) (IT)
(72) Inventor: MARIONI, Elio, 36031 Dueville (VI) (IT)
(74) Representative: Antonucci, Emanuele

(56) References cited:
- EP-A1- 2 862 789
- DE-A1-102012 107 939
- DE-U1- 29 714 938
- JP-A- 2009 196 570

## Description

### Field of application

The present invention relates to a crank drive motor assembly for a pedal-assisted electric bicycle, where "crank drive motor" is understood as meaning a motor operating the shaft which carries the front sprocket or front sprocket set and which is therefore mounted instead of the conventional bottom bracket of the bicycle.

The invention also relates to an electric or pedal-assisted bicycle comprising a crank drive motor assembly.

The invention finds a useful application in the technological sector of electrical mobility.

### Prior art

As is well known, for many years now, owing to a greater sensitivity in environmental matters and the consequent technological improvements in the sector, the use of electric bicycles has increased considerably.

It is emphasized that in electric bicycles an electric motor is generally used as an aid and not as a substitute for the pedalling action. In fact, more correctly one refers to a "pedal-assisted bicycle" which is a bicycle where the propulsive muscle action is assisted - in a specific manner determined by an electronic control unit - by that of an electric motor.

During a first stage of their technological development, said electric bicycles were mostly equipped with motors integrated in one of the hubs of the vehicle. This technical solution has, on the one hand, the advantage of limiting the mechanical complexity of the device and the respective production costs as well as facilitating the conversion of conventional bicycles into electric bicycles.

On the hand, it is clear that such a design solution imposes major constraints in terms of the weight and size of the motor unit. The necessarily small dimensions of the electric motor and the transmission limit the power which is output and, even more so, the torque supplied to the user.

Moreover, the hub motor results in unbalanced loads on the bicycle, thus adversely affecting the manoeuvrability and the stability of the vehicle.

The aforementioned drawbacks therefore limit the use of a hub motor electric bicycle to given applications and market sectors: for example, it is totally inadequate for off-road applications.

In view of the recent commercial and technological boom in the sector the alternative design solution of a crank drive motor has therefore gained importance, this solution, while involving a greater complexity of the device and higher production cost, ensuring however a significantly better performance.

The crank drive motor, unlike the hub motor, is rigidly supported by the frame at the intersection between the seat tube and the down tube and operates directly in the region of the bottom bracket, i.e. on the pedal crank axis. This motor may therefore have relatively large dimensions and is located in a middle position below the centre of gravity of the vehicle.

The actual electric motor is integrated in a motor assembly which generally also comprises part of the electronic interface and in particular the reduction gear which demultiplies the speed at the front sprocket.

The crank drive motors which to date are present on the market, while substantially meeting the requirements of the sector, could nevertheless be further improved and innovated.

One main aspect which may be improved is the compactness and the compatibility of the bicycle drive system comprising both the crank drive motor and the battery and the various apparatus for interfacing with the user (on-board computer) and with the mechanical devices of the vehicle (such as the derailleurs).

In this connection, bicycles with a crank drive motor generally require an ad hoc design, where the various parts must be specifically designed for the electronic control needed to achieve a high-efficiency motorized action.

Another aspect of equal importance is that of limiting the dimensions which often results in technical compromises which are determined in particular by the need to ensure that the interaxial distance between the pedals (so-called "O.L.D." = "over-locknut distance") complies with the standards laid down in the sector.

Also the reduction of costs, in a technological niche sector where not all the solutions have been optimized yet, represents one of the main objectives.

Examples of such pedal-assisted electric bicycles are described in document EP 2 862 789 A1, which is considered the most relevant Prior Art and discloses the features of the preamble of claim 1, and in documents JP 2009 196570 A and DE 297 14 938 U1.

The technical problem of the present invention is to device a crank drive motor assembly for an electric bicycle, having improved characteristics of the existing devices, and in particular having a functionally compact configuration which may be easily adapted to the structures of a conventional bicycle.

### Summary of the invention

The aforementioned technical problem is solved by a motor assembly for an electric bicycle as described in claim 1 as well as an electric bicycle comprising such a device as described in claim 14.

As the person skilled in the art will appreciate, the gear change actuator, which is incorporated in a unit which can be separately handled with the rest of the motor assembly, results in a rationalized design of the drive system, with all the control components being concentrated in a single assembly.

The control cable, which is of the mechanical type, may be mounted in a known manner above a derailleur of the conventional type, allowing rapid and intuitive assembly without the need for specific redesigning of derailleur device.

In particular, the derailleur used may be a mechanically operated derailleur of the known type: the control cable which is conventionally tensioned and released by means of a mechanical control or operating system on the handlebars or the down tube will in this case be operated by the gear change actuator incorporated in the motor assembly.

Other particularly advantageous features of the present invention are described in the dependent claims 2 to 13.

Further characteristic features and advantages of the present invention will emerge from the description, provided hereinbelow, of a preferred example of embodiment provided by way of a non-limiting example with reference to the accompanying drawings.

### Brief description of the drawings

Figure 1 shows a side view of the motor assembly according to the present invention;

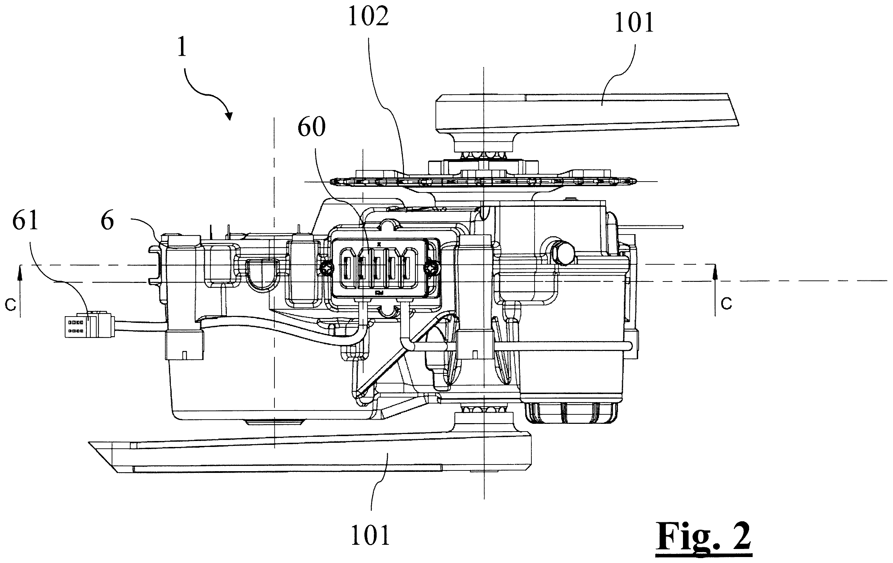

Figure 2 shows a view, from above, of the motor assembly according to the present invention, with associated crankset;

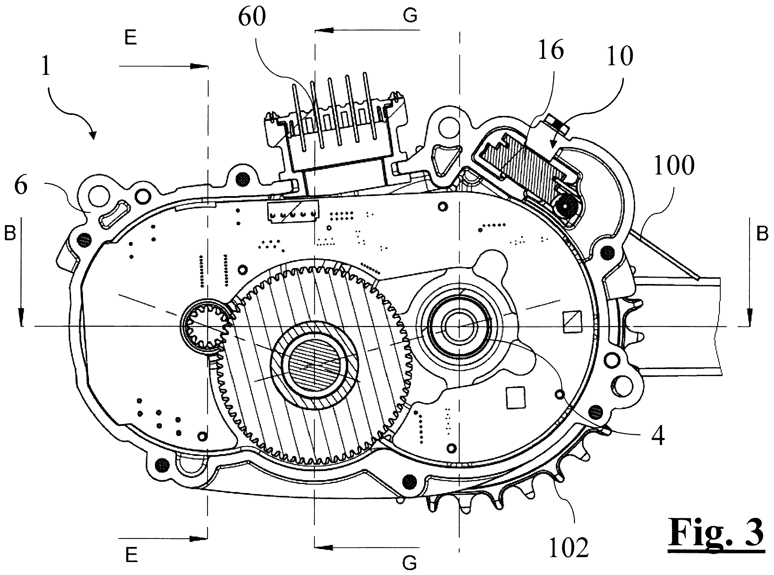

Figure 3 shows a side view, cross-sectioned along the plane C-C in Figure 2, of the motor assembly according to the present invention;

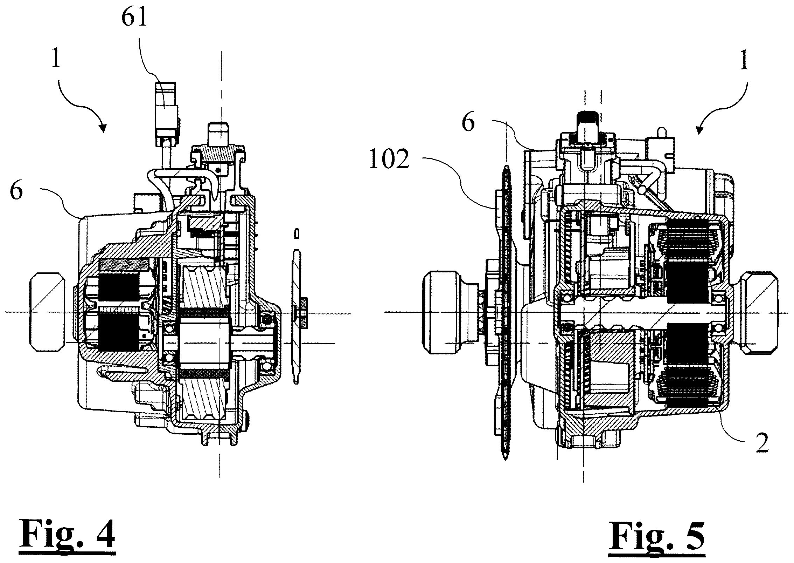

Figure 4 shows a rear view of the motor assembly cross-sectioned along the plane G-G of Figure 3;
Figure 5 shows a front view of the motor assembly cross-sectioned along the plane E-E of Figure 3;

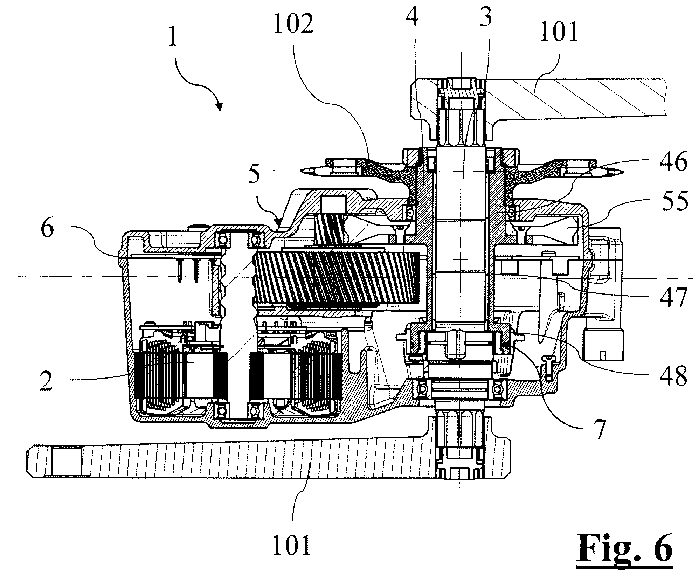

Figure 6 shows a view, from above, of the motor assembly cross-sectioned along the plane B-B of Figure 3;

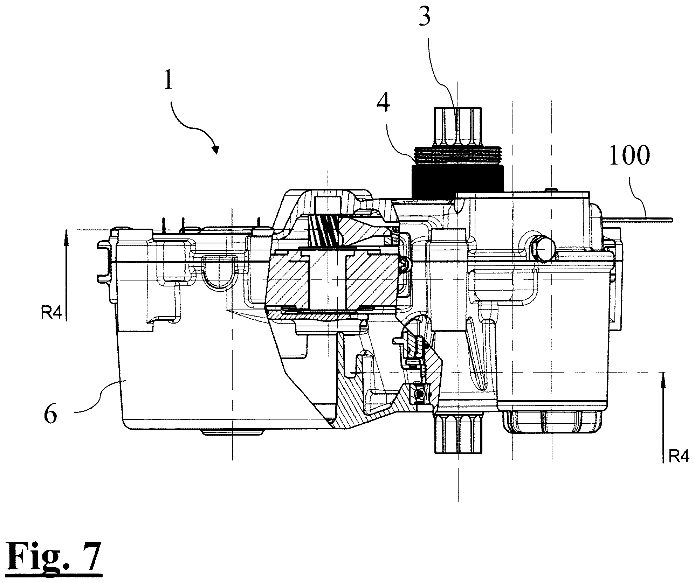

Figure 7 shows a partially cross-sectioned view, from above, of the motor assembly according to Figure 1;

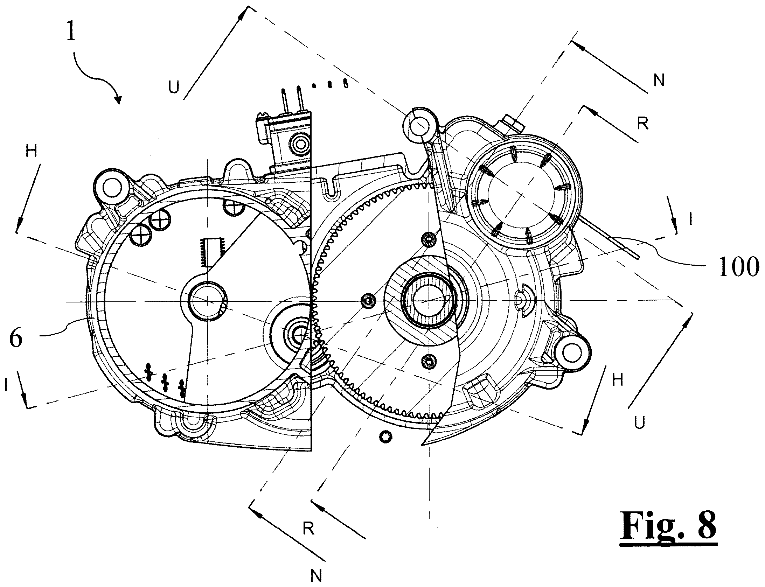

Figure 8 shows a side view of the motor assembly cross-sectioned along the split plane R4-R4 of Figure 7;

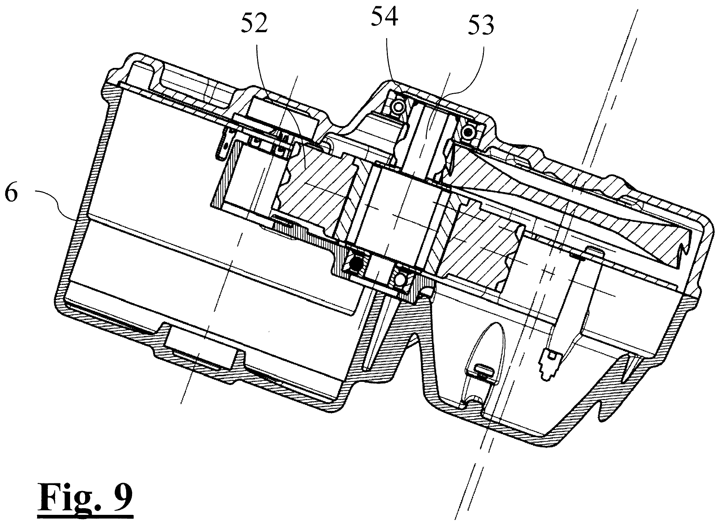

Figure 9 shows a side view, cross-sectioned along the plane H-H in Figure 8, of the motor assembly according to the present invention;

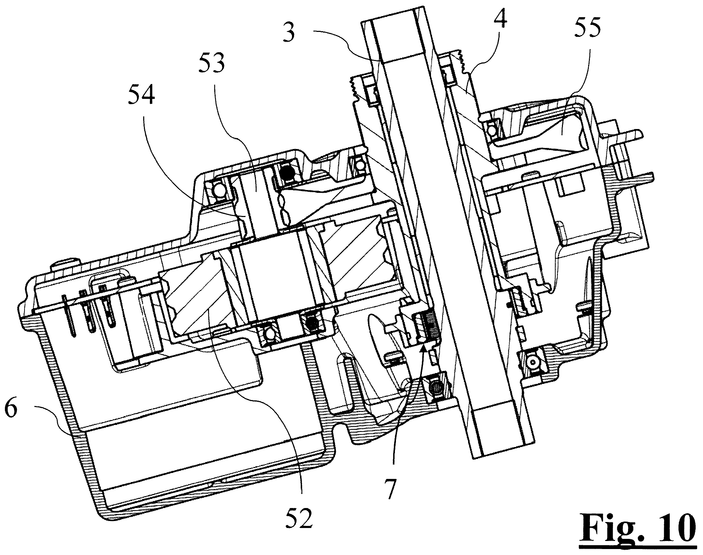

Figure 10 shows a view of the motor assembly cross-sectioned along the plane I-I of Figure 8;

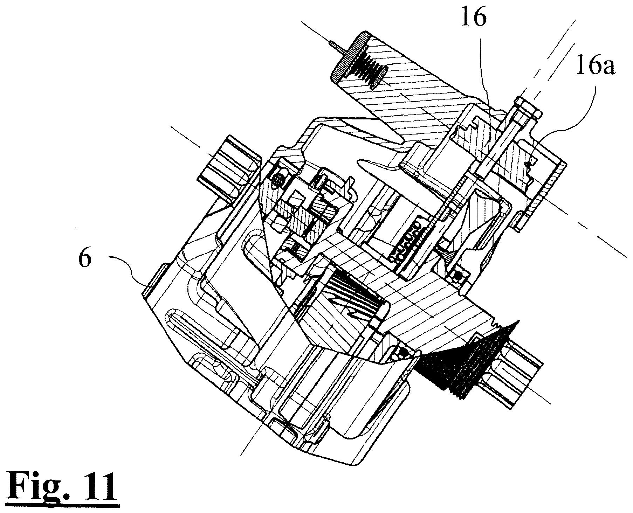

Figure 11 shows a view of the motor assembly cross-sectioned along the plane N-N of Figure 8;
Figure 12 shows a view of the motor assembly cross-sectioned along the plane R-R of Figure 8;
Figure 13 shows a view of the motor assembly cross-sectioned along the plane U-U of Figure 8;
Figures 14-16 show three orthogonal views of the gear change actuator included in the motor assembly;
Figure 17 shows a front view of the pedal shaft and the drive shaft associated with it, having the functions of a torque meter.
Figure 18 shows a perspective view of only the components of the transmission included in the motor assembly;
Figures 19-20 show two orthogonal views of the transmission according to Figure 18;
Figure 21 shows a view, with parts exploded, of the motor and drive pinion included in the motor assembly;
Figure 22 shows a side view of the motor and the drive pinion according to Figure 21;
Figure 23 shows a side view of the motor cross-sectioned along the plane B-B of Figure 22;
Figure 24 shows a detail A of the view shown in Figure 23.

### Detailed description

With reference to the attached figures, 1 is used to denote generically a motor assembly, in particular a crank drive motor assembly, designed to be incorporated in an electric bicycle, in particular of the pedal-assisted type.

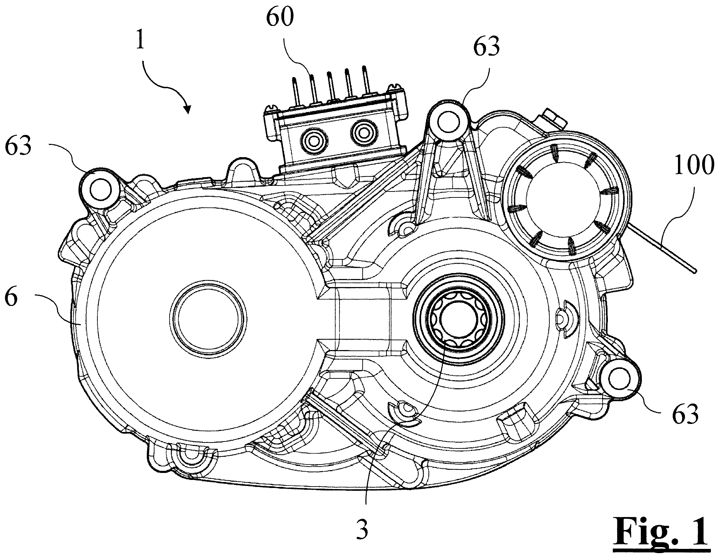

The position references used in the present description, comprising indications such as front or rear, in front of or behind, upper or lower, above or below, or similar references, in all cases refer to the illustrative configuration shown in Figure 1 and are not to be regarded as having a limiting meaning in any way.

In particular, it should be pointed out that the aforementioned motor assembly 1 may be, during use, varyingly inclined depending on the form of the bicycle frame with which it is associated.

The motor assembly 1, as mentioned in the section relating to the area of application, is of the crank drive motor type, namely is designed to be mounted in a position below the centre of gravity in place of the conventional bottom bracket of the bicycle.

It has in fact a containment case 6 which is provided with mounts 63 for performing mounting on a bicycle frame and has, projecting transversely therefrom, the opposite ends of a pedal shaft 3 which corresponds in terms of function to the spindle of the conventional bottom brackets, these opposite ends being designed so that the pedal cranks 101 may be fixed on them.

It will be noted that the crankset, differently from that which occurs in the case of conventional bicycles, is not formed as one piece: in fact the front sprocket 102 is separate from the respective pedal crank 101 and mounted on an associated drive shaft 4 which is formed as a sleeve coaxial with and partially mounted over the pedal shaft 3.

The case 6 contains internally a main electric motor 2, a gear transmission 5 which connects kinematically the rotor 21 of said main electric motor 2 to the drive shaft 4, a gear change actuator 10 as well as the electronic boards and the electrical connections necessary for operation of the assembly.

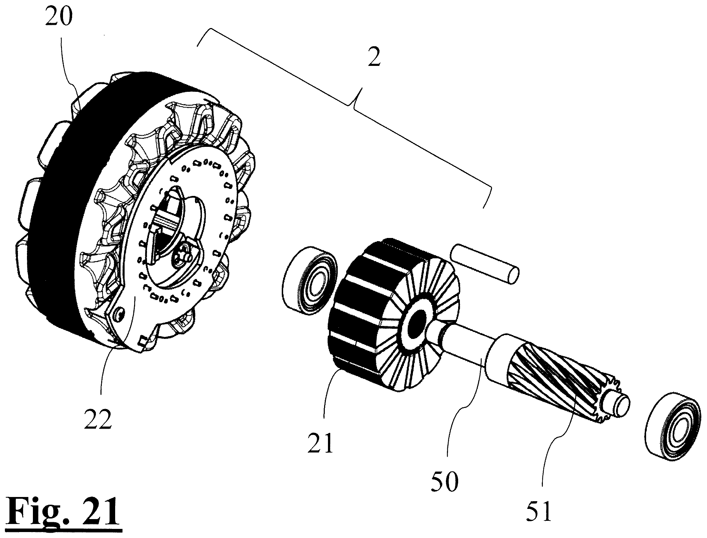

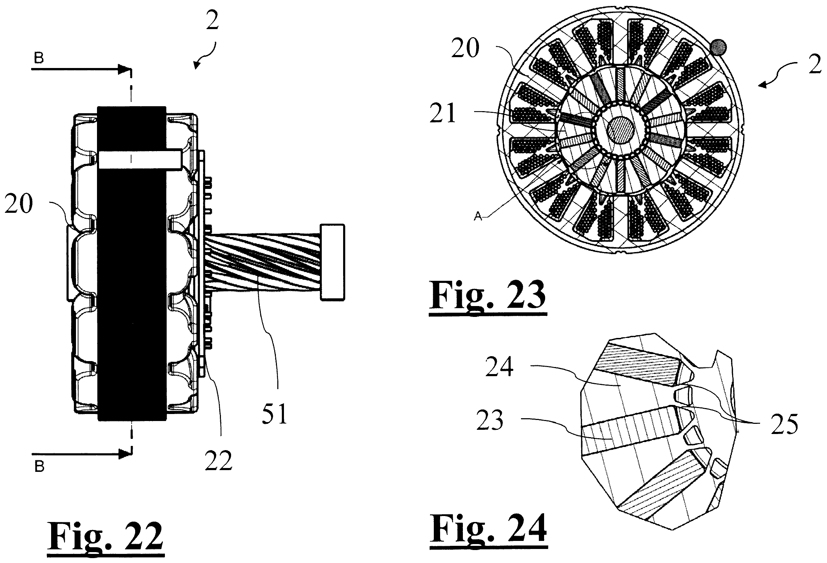

The main electric motor 2, shown separately in Figures 21 to 24, comprises an external stator 20 integral with the case 6 and an internal rotor 21 keyed onto a first shaft 50 provided, at its free end, with a helical toothing which defines a first pinion 51 of the transmission 5. A control board 22 for the rotor position, having the function of interconnecting the phases of the motor, is associated with the stator 20.

The main electric motor 2 is of the synchronous type, where the rotor comprises radially extending permanent magnets 23 embedded in a stack of ferromagnetic laminations 24. The external portion of the rotor, which includes the permanent magnets 23, is connected to an internal portion of laminations alone by means of bridge-pieces 25 which structurally support the external portion. The small thickness of said bridge-pieces, within the technological limits of shearing, is able to ensure, in addition to the structural function, magnetic isolation of the adjacent poles so as to guide the greatest possible magnetic flow towards the stator, improving the efficiency of the machine.

Each portion of the lamination stack 24 arranged, along the external portion, between two permanent magnets 23 is connected to the internal portion by means of two bridge-pieces 25, preferably arranged to form an externally tapering isosceles trapezium.

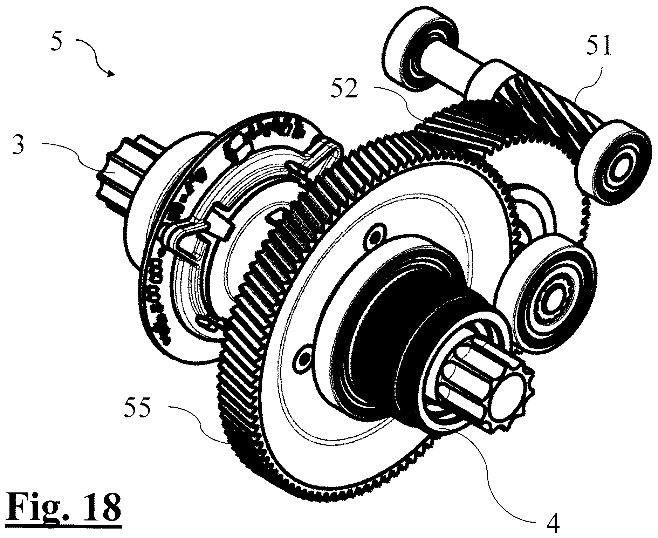

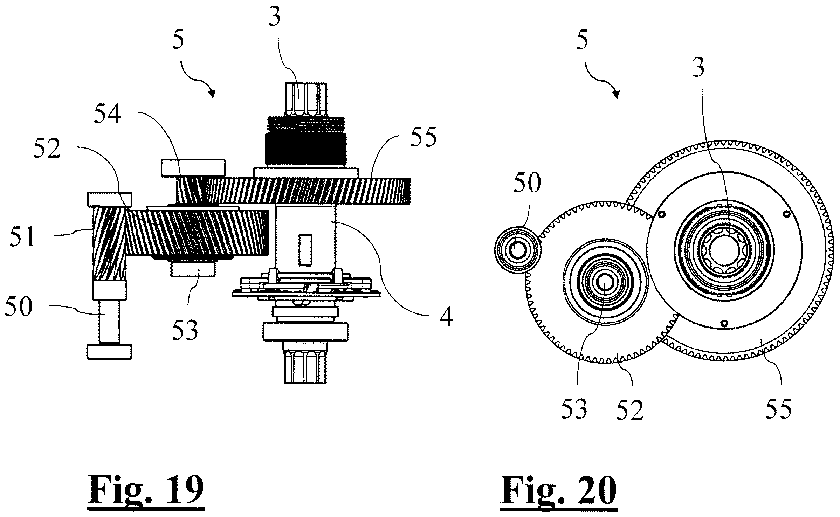

The transmission 5, shown separately in Figures 18-20, has two gear stages, which are both helical.

In the first gear stage, the aforementioned first pinion 51 meshes with a first gear 52 keyed onto a second shaft 53; in the second gear stage, a second pinion 54 formed on the second shaft 53 meshes with a second gear 55 integral with the aforementioned drive shaft 4.

The centre-to-centre segments are conveniently inclined to form a nonplanar angle and thus limit the overall volume of the transmission 5.

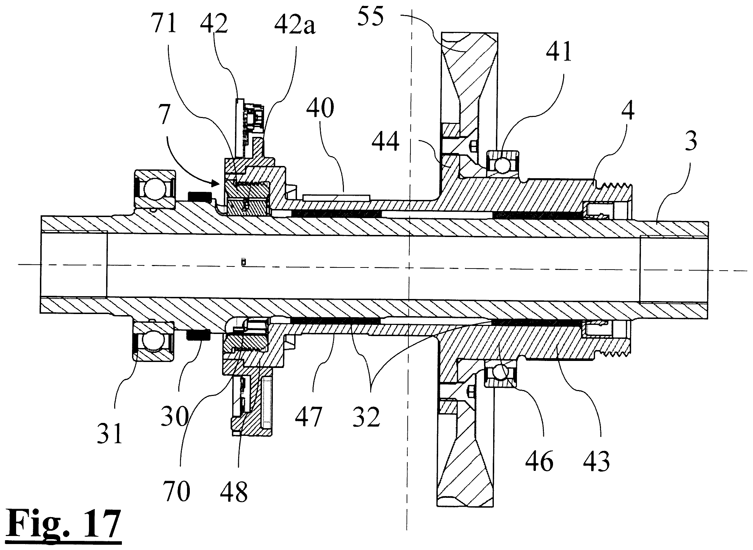

With particular reference to Figure 17, we shall now describe the drive shaft 4, which performs the function of a torsiometer, and its relationship with the pedal shaft 3.

As previously mentioned, the drive shaft 4 is mounted over and coaxial with the pedal shaft 3 to which it is connected by means of a freewheel 7.

The freewheel 7 is composed of a machined profile 70 on the pedal shaft, inside which the pawls pushed outwards by resilient means and by a backing ring nut 71 screwed inside a corresponding front seat at the end of the drive shaft 4 are arranged. The backing ring nut 71 defines internally the series of teeth or recesses for unidirectional locking of the pawls.

It should be noted that the drive shaft has three cylindrical portions arranged in succession: a first portion 46, with a relatively thick wall, an intermediate portion 47, with a thinner wall, and finally a third portion 48, which is thicker than the intermediate portion for defining the seat which houses the backing ring nut 71.

If the pedal shaft 3 passes transversely through the case 6 emerging from both the sides of the latter, the drive shaft 4 extends partially outside the case 6 only with part of the first portion 46, where it has a splined surface 43 onto which the front sprocket 102 is fixed by means of a ring nut.

The assembly formed by the pedal shaft 3 and by the drive shaft 4 is thus supported on the case by a first bearing 31 positioned on the pedal shaft 3 against a respective shoulder and by a second bearing 41 positioned instead on the drive shaft 4 in an internal position with respect to the splined surface 43.

Two friction bushes 32 are instead positioned between the pedal shaft 3 and the drive shaft 4, respectively underneath the first portion 46 and the second portion 47. The friction bushes appear to be suitable since the relative rotation of the two elements occurs at low speed and substantially without any stress.

The drive shaft 4 also has, at the innermost end of the first portion 46, a quatrefoil flange 44 for fixing, by means of four screws, the second gear 55. The second bearing 41 rests conveniently against the stop surface defined by the said second gear 55.

It should be noted that, since the second gear 55 and the backing ring nut 71 are both mounted on the drive shaft 4, the latter does not require particular mechanical strength characteristics and need not be heat-treated, thus allowing easy machining of the part.

Both the front gear 102 and the second gear 55, namely the points for transmission to the shaft of the resistance torque and the driving torque supplied by the motor, are therefore fixed on top of the first portion 46. The freewheel 7 which transmits the driving torque due to the action of the user on the pedals is instead located at the opposite end of the drive shaft, on the third portion 48.

Thus the torsional deformations of the second portion 47, which is situated in between the other two portions and conveniently made with a thin wall, may be measured in order to obtain an indication of the torque when it is applied by the cyclist and which is then used in a manner known per se in the control logic of the motor.

The torsional deformation is in particular measured by means of two strain gauges 40 applied to the second portion 47 and connected to a mobile electronic board 42 supported circumferentially, by means of a board holder 42a provided with three timing and centring pins, above the third portion 48.

Opposite the mobile electronic board 42 a corresponding receiving electronic board is provided, not visible in the attached figures, said board being mounted fixed with respect to the case 6 supporting it.

An encoder wheel 30, integral with the pedal shaft portion 3 situated between the first bearing 31 and the freewheel 7, is provided underneath the receiving electronic board and aligned therewith. In the preferred embodiment described here the encoder wheel is of the magnetic type, namely it is a multipolar magnet with n north-south pole pairs in sequence, the polarity of which may be detected by suitable sensors. With this encoder wheel 30, therefore, by means of Hall effect sensors or TMR sensors mounted on the receiving electronic board, rotation of the pedals may be detected, this being a necessary condition for starting the motor in pedal-assisted bicycles.

Alternatively, it is possible to use encoder wheels of another type with suitable sensors: it is possible in particular to use encoder wheels formed by a plurality of teeth, the presence or absence of which may be detected for example by inductive or optical proximity sensors.

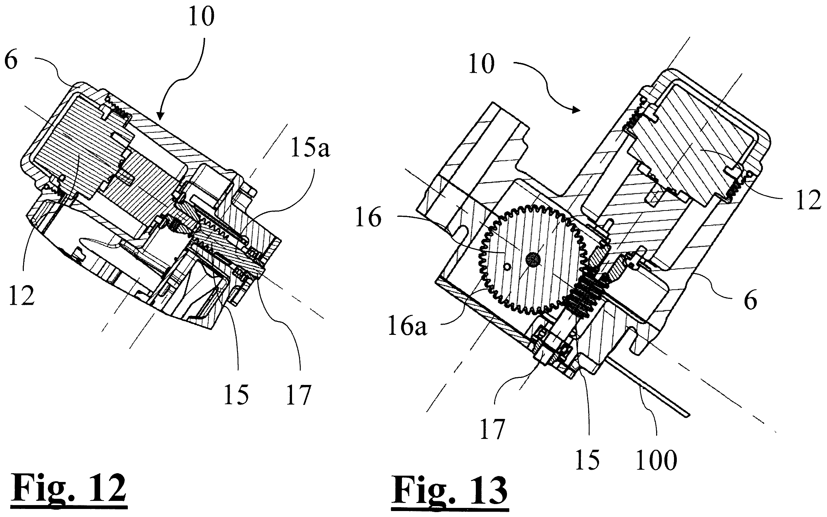

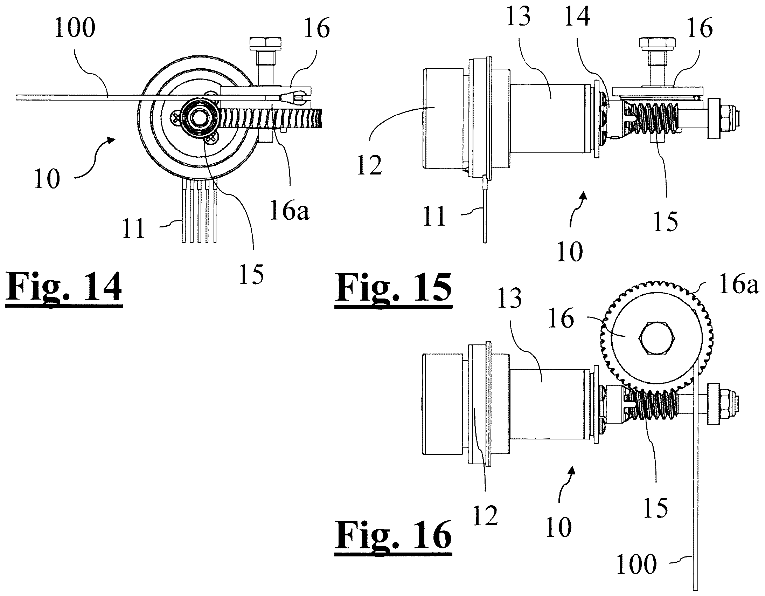

With particular reference to Figures 12-16, we shall now describe the gear change actuator 10.

The gear change actuator 10 comprises an auxiliary electric motor 12 connected to signal and power supply cables 11 which, as discussed below, are connected to interfaces outside the case 6.

The auxiliary electric motor 12 is connected at the front to a reduction gear unit 13, the output of which is coaxial with the output of the motor. The end of a rotatable shaft 15a, which has a worm screw 15 in a first position thereof adjacent to the reducer 13, is coupled to the output of the reduction gear 13 by means of a jaw clutch 14. The axis of the rotatable shaft 15a is parallel to that of the pedal shaft 3 and the drive shaft 4, namely transverse to the case 6.

The worm screw 15 therefore meshes with a toothed portion 16a of a winding pulley 16 mounted rotatably with respect to the case 6 between two parallel walls which support the revolving pin thereof. A control cable 100 which emerges from a suitable opening in the case 6 is wound around the winding pulley 16 so as to operate a rear derailleur of the bicycle.

The action of the auxiliary electric motor 12 therefore causes in one direction winding and subsequent pulling of the control cable 100 and in the other direction unwinding and consequent release thereof.

The rotatable shaft 15a which supports the worm screw 15 has a free end projecting outside the case 6 and profiled such that it can be engaged with a rotating and tightening tool such as a spanner or an Allen key, so that a release point 17 of the device may be defined.

By operating the release point 17 with the tool it is in fact possible to rotate the rotatable shaft 15a and perform a gear change even if there is no electric power supply or in the event of malfunctioning of the auxiliary electric motor 12. With this emergency procedure an easy gear may be selected in the event of a malfunction of the motor assembly 1 or a power failure, so as to allow one to get back easily even without the aid of the motor.

The motor assembly 1 described above is connected to a battery pack by means of a power supply jack 60 provided at the top of the case 6.

A signal connection device 61, in the form of a connector at the end of a cable emerging from the case 6, is also provided and is designed to be connected to a main control unit which is positioned preferably on the handlebars of the bicycle and provided with a control interface for the cyclist. The pedalling speed and torque signals detected inside the motor assembly 1 are sent to this main control unit, while this main control unit emits the gear and gear-changing signals which operate respectively the main electric motor 2 and the auxiliary electric motor 12.

Obviously, the person skilled in the art may make numerous modifications and variations to the method and device described above, all of which moreover are contained in the scope of protection of the invention, as defined by the following claims.

## Claims

1. Motor assembly (1) for an electric bicycle, comprising: a case (6); a drive shaft (4) designed to support integrally at least one front bicycle sprocket (102); a main electric motor (2) comprising a stator (20) and a rotor (21) kinematically connected to said drive shaft (4); and a gear change actuator (10) designed to operate a control cable (100) which can be associated with a rear bicycle derailleur; the drive shaft (4), the main electric motor (2) and the gear change actuator (10) being housed in or supported by said case (6); **characterized in that** said gear change actuator (10) comprises at least one release point (17) accessible from outside the case (6) so as to allow emergency operation by the user in the event of a malfunction.

2. Motor assembly (1) according to claim 1, wherein said gear change actuator (10) is designed to operate said control cable (100), tensioning or releasing it.

3. Motor assembly (1) according to claim 2, wherein said gear change actuator (10) comprises a winding pulley (16) around which the control cable (100) is wound.

4. Motor assembly (1) according to claim 3, wherein said gear change actuator (10) comprises an auxiliary electric motor (12) designed to rotationally drive a worm screw (15), said worm screw (15) meshing with a toothed portion (16a) of the winding pulley (16).

5. Motor assembly (1) according to claim 4, wherein the axis of the auxiliary motor (12) and said worm screw (15) is parallel to the axis of the drive shaft (4), the axis about which said winding pulley rotates being orthogonal to the axis of the auxiliary motor (12) and the worm screw (15).

6. Motor assembly (1) according to claim 5, wherein said worm screw (15) is mounted on a rotatable shaft (15a), said release point (17) being defined by the free end of said rotatable shaft (15a) projecting outside the case (6).

7. Motor assembly (1) according to claim 6, wherein said free end of the rotatable shaft (15a) has, in the region of the release point, a profile designed to be engaged by a tool which allows rotation of the rotatable shaft (15a).

8. Motor assembly (1) according to one of the preceding claims, wherein said case (6) further houses a transmission (5) which kinematically connects said main electric motor (2) to said drive shaft (4).

9. Motor assembly (1) according to one of the preceding claims, comprising a power supply jack (60) designed to be connected to a battery, said power supply jack (6) supplying electric power both to the main electric motor (2) and to the gear change actuator (10).

10. Motor assembly (1) according to one of the preceding claims, wherein said gear change actuator (10) is designed to receive control signals from a control unit remote from the motor assembly (1).

11. Motor assembly (1) according to Claim 10, comprising a signal connector (61) electrically connected to the gear change actuator (10) and designed to be coupled to said remote control unit in order to receive the aforementioned control signals, said signal connector (61) also allowing communication of the remote control unit with components of the motor assembly other than the gear change actuator (10).

12. Motor assembly (1) according to one of the preceding claims, further comprising a pedal shaft (3) designed to support at the two opposite ends a corresponding number of bicycle pedal cranks (101), the drive shaft (4) being coaxial with said pedal shaft (3), said pedal shaft (3) rotationally driving said drive shaft (4) at least in a first direction of rotation.

13. Motor assembly (1) according to claim 12, wherein said pedal shaft (3) is kinematically connected to said drive shaft (4) by means of a freewheel (7).

14. Electric bicycle comprising a motor assembly (1) according to one of the preceding claims.

## Patentansprüche

1. Motorbaugruppe (1) für ein Elektrofahrrad, die aufweist: ein Gehäuse (6); eine Antriebswelle (4), die dafür ausgelegt ist, mindestens ein vorderes Fahrrad-Kettenrad (102) ganzheitlich zu tragen; einen Hauptelektromotor (2), der einen Stator (20) und einen kinematisch mit der Antriebswelle (4) verbundenen Rotor (21) aufweist; und einen Gangwechselaktuator (10), der dafür ausgelegt ist, ein Steuerkabel (100) zu betätigen, das mit einem hinteren Fahrrad-Umwerfer verbunden werden kann; wobei die Antriebswelle (4), der Hauptelektromotor (2) und der Gangwechselaktuator (10) in dem Gehäuse (6) untergebracht oder von dem Gehäuse (6) abgestützt sind; **dadurch gekennzeichnet, dass** der Gangwechselaktuator (10) mindestens einen Freigabepunkt (17) aufweist, der von außerhalb des Gehäuses (6) zugänglich ist, um eine Notbetätigung durch den Benutzer im Fall einer Fehlfunktion zu gestatten.

2. Motorbaugruppe (1) nach Anspruch 1, bei der der Gangwechselaktuator (10) dafür ausgelegt ist, das Steuerkabel (100) zu betätigen, wobei es gespannt oder entlastet wird.

3. Motorbaugruppe (1) nach Anspruch 2, bei der der Gangwechselaktuator (10) eine Wickelrolle (16) aufweist, um die herum das Steuerkabel (100) gewickelt ist.

4. Motorbaugruppe (1) nach Anspruch 3, bei der der Gangwechselaktuator (10) einen Hilfselektromotor (12) aufweist, der dafür ausgelegt ist, eine Schneckenschraube (15) drehanzutreiben, wobei die Schneckenschraube (15) mit einem Verzahnungsteil (16a) der Wickelrolle (16) in Eingriff ist.

5. Motorbaugruppe (1) nach Anspruch 4, bei der die Achse des Hilfsmotors (12) und der Schneckenschraube (15) parallel zu der Achse der Antriebswelle (4) ist, wobei die Achse, um die sich die Wickelrolle dreht, orthogonal zu der Achse des Hilfsmotors (12) und der Schneckenschraube (15) ist.

6. Motorbaugruppe (1) nach Anspruch 5, bei der die Schneckenschraube (15) auf einer drehbaren Welle (15a) montiert ist, wobei der Freigabepunkt (17) durch das freie Ende der drehbaren Welle (15a), die nach außerhalb des Gehäuses (6) vorsteht, definiert ist.

7. Motorbaugruppe (1) nach Anspruch 6, bei der das freie Ende der drehbaren Welle (15a) im Bereich des Freigabepunktes ein Profil hat, das dafür ausgelegt ist, mit einem Werkzeug ergriffen zu werden, das eine Drehung der drehbaren Welle (15a) gestattet.

8. Motorbaugruppe (1) nach einem der vorhergehenden Ansprüche, bei der das Gehäuse (6) ferner ein Getriebe (5) aufnimmt, das den Hauptelektromotor (2) kinematisch mit der Antriebswelle (4) verbindet.

9. Motorbaugruppe (1) nach einem der vorhergehenden Ansprüche, mit einem Stromzufuhranschluss (6), der dafür ausgelegt ist, mit einer Batterie verbunden zu werden, wobei der Stromzufuhranschluss (6) elektrischen Strom sowohl dem Hauptelektromotor (2) als auch dem Gangwechselaktuator (10) zuführt.

10. Motorbaugruppe (1) nach einem der vorhergehenden Ansprüche, bei der der Gangwechselaktuator (10) dafür ausgelegt ist, Steuersignale von einer Steuerungseinheit zu empfangen, die von der Motorbaugruppe (1) entfernt ist.

11. Motorbaugruppe (1) nach Anspruch 10, mit einem Signalverbinder (61), der elektrisch mit dem Gangwechselaktuator (10) verbunden ist und dafür ausgelegt ist, mit der entfernten Steuerungseinheit verbunden zu werden, um die vorgenannten Steuersignale zu empfangen, wobei der Signalverbinder (61) auch eine Kommunikation der entfernten Steuerungseinheit mit anderen Komponenten der Motorbaugruppe neben dem Gangwechselaktuator (10) gestattet.

12. Motorbaugruppe (1) nach einem der vorhergehenden Ansprüche, ferner mit einer Pedalwelle (3), die dafür ausgelegt ist, an den beiden entgegengesetzten Enden eine entsprechende Anzahl von Fahrradpedalkurbeln (101) zu tragen, wobei die Antriebswelle (4) koaxial zu der Pedalwelle (3) ist, wobei die Pedalwelle (3) die Antriebswelle (4) zumindest in einer ersten Drehrichtung drehantreibt.

13. Motorbaugruppe (1) nach Anspruch 12, bei der die Pedalwelle (3) mittels eines Freilaufes (7) kinematisch mit der Antriebswelle (4) verbunden ist.

14. Elektrofahrrad mit einer Motorbaugruppe (1) nach einem der vorhergehenden Ansprüche.

## Revendications

1. Ensemble moteur (1) pour bicyclette électrique, comprenant : un boîtier (6) ; un arbre d'entraînement (4) conçu pour supporter de façon solidaire au moins un pignon avant (102) de bicyclette ; un moteur électrique principal (2) comprenant un stator (20) et un rotor (21) reliés de manière cinématique audit arbre d'entraînement (4) ; et un actionneur (10) de changement de vitesse conçu pour actionner un câble de commande (100) qui peut être associé à un dérailleur arrière de bicyclette ; l'arbre d'entraînement (4), le moteur électrique principal (2) et l'actionneur (10) de changement de vitesse étant logés dans ledit boîtier (6) ou supportés par celui-ci ; **caractérisé en ce que** ledit actionneur (10) de changement de vitesse comprend au moins un point de libération (17) accessible depuis l'extérieur du boîtier (6) de manière à permettre à l'utilisateur une opération d'urgence en cas de dysfonctionnement.

2. Ensemble moteur (1) selon la revendication 1, dans lequel ledit actionneur (10) de changement de vitesse est conçu pour actionner ledit câble de commande (100), tendant ou relâchant celui-ci.

3. Ensemble moteur (1) selon la revendication 2, dans lequel ledit actionneur (10) de changement de vitesse comprend une poulie d'enroulement (16) autour de laquelle le câble de commande (100) est enroulé.

4. Ensemble moteur (1) selon la revendication 3, dans lequel ledit actionneur (10) de changement de vitesse comprend un moteur électrique auxiliaire (12) conçu pour entraîner en rotation une vis sans fin (15), ladite vis sans fin (15) étant en prise avec une partie dentée (16a) de la poulie d'enroulement (16).

5. Ensemble moteur (1) selon la revendication 4, dans lequel l'axe du moteur auxiliaire (12) et de ladite vis sans fin (15) est parallèle à l'axe de l'arbre d'entraînement (4), l'axe autour duquel tourne ladite poulie d'enroulement étant orthogonal à l'axe du moteur auxiliaire (12) et de la vis sans fin (15).

6. Ensemble moteur (1) selon la revendication 5, dans lequel ladite vis sans fin (15) est montée sur un arbre rotatif (15a), ledit point de libération (17) étant défini par le fait que l'extrémité libre dudit arbre rotatif (15a) dépasse à l'extérieur du boîtier (6).

7. Ensemble moteur (1) selon la revendication 6, dans lequel ladite extrémité libre de l'arbre rotatif (15a) présente, dans la zone du point de libération, un profil conçu pour une prise avec un outil qui permet une rotation de l'arbre rotatif (15a).

8. Ensemble moteur (1) selon l'une des revendications précédentes, dans lequel ledit boîtier (6) contient en outre une transmission (5) qui relie cinématiquement ledit moteur électrique principal (2) audit arbre d'entraînement (4).

9. Ensemble moteur (1) selon l'une des revendications précédentes, comprenant une prise d'alimentation (60) destinée à être connectée à une batterie, ladite prise d'alimentation (6) fournissant une alimentation électrique à la fois au moteur électrique principal (2) et à l'actionneur (10) de changement de vitesse.

10. Ensemble moteur (1) selon l'une des revendications précédentes, dans lequel ledit actionneur (10) de changement de vitesse est conçu pour recevoir des signaux de commande en provenance d'une unité de commande distante de l'ensemble moteur (1).

11. Ensemble moteur (1) selon la revendication 10, comprenant un connecteur de signal (61) connecté électriquement à l'actionneur (10) de changement de vitesse et conçu pour être relié à ladite unité de commande distante afin de recevoir les signaux de commande précités, ledit connecteur de signal (61) permettant également la communication de l'unité de commande distante avec des composants de l'ensemble moteur autres que l'actionneur (10) de changement de vitesse.

12. Ensemble moteur (1) selon l'une des revendications précédentes, comprenant en outre un arbre de pédalier (3) conçu pour supporter aux deux extrémités opposées un nombre correspondant de manivelles (101) de pédale de bicyclette, l'arbre d'entraînement (4) étant coaxial audit arbre de pédalier (3), ledit arbre de pédalier (3) entraînant en rotation ledit arbre d'entraînement (4) au moins dans une première direction de rotation.

13. Ensemble moteur (1) selon la revendication 12, dans lequel ledit arbre de pédalier (3) est relié de manière cinématique audit arbre d'entraînement (4) au moyen d'une roue libre (7).

14. Bicyclette électrique comprenant un ensemble moteur (1) selon l'une des revendications précédentes.
